# EUROPÄISCHE PATENTSCHRIFT

(11) **EP 4 056 024 B1**
(45) Veröffentlichungstag und Bekanntmachung des Hinweises auf die Patenterteilung: **30.04.2025**
(21) Anmeldenummer: 22160193.3
(22) Anmeldetag: 04.03.2022
(51) Int. Cl.: A01F 15/07, A01F 15/08

(54) **LANDWIRTSCHAFTLICHE ERNTEMASCHINE**
AGRICULTURAL HARVESTING MACHINE
MACHINE AGRICOLE DE RÉCOLTE

(30) Priorität: 11.03.2021 DE 202021101225 U
(43) Veröffentlichungstag der Anmeldung: 14.09.2022
(73) Patentinhaber: Pöttinger Landtechnik GmbH, 4710 Grieskirchen (AT)
(72) Erfinder: Bumberger, Rainer, 4710 Grieskirchen (AT); Kleesadl, Johann, 4710 Grieskirchen (AT); Schulte, Thorsten, 4710 Grieskirchen (AT)
(74) Vertreter: Thoma, Michael

(56) Entgegenhaltungen:
- EP-A1- 3 036 986
- EP-B1- 1 034 695
- DE-A1- 102016 124 902
- US-A1- 2020 205 348

## Beschreibung

Die vorliegende Erfindung betrifft eine landwirtschaftliche Erntemaschine mit einem Wickeltisch für einen Erntegutballen, wobei der Wickeltisch um eine Kippachse verkippbar gelagert ist und eine Wiegevorrichtung zum Wiegen des Erntegutballens auf dem Wickeltisch vorgesehen ist.

Die Bestimmung des Gewichts von Erntegutballen kann aus verschiedenen Gründen sinnvoll sein, beispielsweise für die Erfassung des Flächenertrags oder zur Steuerung von Einstellungen an der Wickelvorrichtung oder der Ballenpresse. Dabei ist es bereits bekannt, das Ballengewicht am Wickeltisch zu messen, vgl. beispielsweise NL 2 010 169 C, EP 2 000 785 B1, EP 1 034 695 B1 oder EP 2 745 675 B1.

Die Wickeltische, auf denen das Gewicht der Erntegutballen gemessen wird, können dabei Teil einer Wickelvorrichtung sein, die einer Ballenpresse nachgeordnet sein kann, so dass die Ballenpresse die Erntegutballen direkt auf den Wickeltisch ablegen kann. Grundsätzlich können aber auch eigenständige bzw. von der Ballenpresse separate Wickelvorrichtungen solche Wickeltische mit einer Gewichtsmesseinrichtung aufweisen.

Die DE 10 2016 124 902 A1 zeigt eine landwirtschaftliche Erntemaschine der eingangs genannten Art, wobei der Wickeltisch bei Bergab- bzw. Bergauffahrten verkippt werden kann und eine Wiegevorrichtung den Ballen wiegt, wobei eine Steuervorrichtung die Auswurfgeschwindigkeit des Ballens anpasst.

Bei den bisherigen Wickeltischen mit einer Wiegeeinrichtung ist die Genauigkeit der Gewichtsbestimmung der Erntegutballen jedoch begrenzt. Zum anderen sind die Wiegevorrichtungen oft recht aufwändig ausgebildet und hinsichtlich ihrer Sensorik auch empfindlich. Um die Gewichtsmesssensorik für den rauen landwirtschaftlichen Betrieb geschützt unterzubringen, werden bisweilen Abdeckungen und dergleichen verbaut, was zusätzlichen Aufwand und zusätzliches Gewicht mit sich bringt.

Der vorliegenden Erfindung liegt daher die Aufgabe zugrunde, eine verbesserte landwirtschaftliche Erntemaschine der genannten Art zu schaffen, die Nachteile des Stands der Technik vermeidet und letzteren in vorteilhafter Weise weiterbildet. Insbesondere soll mit einer einfachen, geschützten Sensorik eine präzise Messung des Ballengewichts ermöglicht werden, ohne stärkere Eingriffe in die mechanische Konstruktion des Wickeltischs und dessen Einbauumgebung vornehmen zu müssen.

Erfindungsgemäß wird die genannte Aufgabe durch eine landwirtschaftliche Erntemaschine gemäß Anspruch 1 gelöst. Bevorzugte Ausgestaltungen der Erfindung sind Gegenstand der abhängigen Ansprüche.

Es wird also vorgeschlagen, die Gewichtsmessung im Kipplager des Wickeltischs vorzunehmen und dabei die Neigung des Wickeltischs gegenüber der Horizontalen bzw. der Wirkrichtung der Erdanziehung zu berücksichtigen, um Beeinflussungen des Messergebnisses durch Schrägstellungen des Wickeltischs zu kompensieren. Erfindungsgemäß umfasst die Wiegevorrichtung einen Kraftmessbolzen, der die Kippachse des Wickeltischs bildet, sowie eine Kippwinkel-Ausgleichsvorrichtung, die eine Neigungssensorik zum Bestimmen der Verkippung des Wickeltischs gegenüber der Horizontalen aufweist und dazu ausgebildet ist, für die Aufnahme des Messsignals des Kraftmessbolzens den Wickeltisch in eine definierte Messstellung bezüglich der Horizontalen zu bringen. Zusätzlich kann die Kippwinkelausgleichsvorrichtung auch dazu ausgebildet sein, ein Messsignal des Kraftmessbolzens um die von der Neigungssensorik bestimmte Verkippung des Wickeltischs zu korrigieren.

Der Kippwinkel-Ausgleichsvorrichtung liegt die Überlegung zugrunde, dass die absolute Position bzw. Ausrichtung des Wickeltischs relevant ist, um mit dem Kraftmessbolzen reproduzierbare Messungen zu erreichen. Der Einfluss der absoluten Position bzw. Ausrichtung des Wickeltischs wird mittels der Neigungssensorik bestimmt, so dass die Kippwinkel-Ausgleichsvorrichtung das Messsignal des Kraftmessbolzens entsprechend korrigieren und/oder den Wickeltisch für die Aufnahme des Messsignals des Kraftmessbolzens in eine definierte Stellung bezüglich der Wirkrichtung der Erdanziehung bringen kann.

Gleichzeitig kann durch die Verwendung des Kraftmessbolzens im Kipplager des Wickeltischs eine einfache Integration der Wiegeeinrichtung in den Wickeltisch bzw. dessen Einbauumgebung erzielt werden, die die Sensorik schützt und keine größeren Eingriffe in die Konstruktion des Wickeltischs und dessen Einbauumgebung erfordert. Gegebenenfalls kann die Wiegevorrichtung auch an entsprechenden Erntemaschinen nachgerüstet werden, ohne größere Umbaumaßnahmen vornehmen zu müssen.

In vorteilhafter Weiterbildung der Erfindung kann die genannte Neigungssensorik einen gyroskopischen Sensor umfassen, der am Wickeltisch oder einem damit verkippenden Anbauteil angebracht sein kann, um Neigungsbewegungen bzw. Kippbewegungen des Wickeltischs mitzumachen und ein Sensorsignal bereitzustellen, das die Neigung des Wickeltischs gegenüber der Horizontalen angibt. Dabei meint die Neigung bzw. Verkippung gegenüber der Horizontalen nicht zwangsweise den tatsächlichen Winkel gegenüber der Horizontalen, sondern allgemein relativ zur Richtung der Erdbeschleunigung. Insofern kann der Neigungswinkel bzw. Kippwinkel des Wickeltischs gegenüber der Vertikalen oder gegenüber der Horizontalen gemessen werden bzw. angegeben werden, da beides gleichermaßen den Einfluss der Schrägstellung auf die Gewichtsmessung charakterisiert.

Alternativ oder zusätzlich zu einem solchen gyroskopischen Sensor kann die Neigungssensorik auch eine Inertialmesseinrichtung mit Beschleunigungs- und Drehratensensormitteln umfassen, die Beschleunigungs- und Drehratensignale bereitstellen, aus denen die Ausrichtung des Wickeltischs bezüglich der Erdbeschleunigung bestimmt werden kann. Eine solche Inertialmesseinrichtung wird bisweilen auch als IMU bezeichnet und kann die Stellung und Stellungsänderungen des Wickeltischs absolut im Raum sehr präzise bestimmen.

Eine solche Inertialmesseinrichtung kann unmittelbar am Wickeltisch angebracht werden oder einem damit verbundenen Anbauteil, das die Neigungs- bzw. Kippbewegungen des Wickeltischs mitmacht.

Die genannte Kippwinkel-Ausgleichsvorrichtung kann die Signale der Neigungssensorik mit den Signalen des Kraftmessbolzens verrechnen. Insbesondere kann die Kippwinkelausgleichsvorrichtung eine Recheneinrichtung aufweisen, um die Neigung bzw. Verkippung des Wickeltischs gegenüber der Horizontalen rechnerisch zu berücksichtigen und das Messsignal des Kraftmessbolzens bzw. das hieraus bestimmte Gewicht entsprechend zu korrigieren, um den Einfluss der Schrägstellung bzw. Verkippung herauszurechnen und das tatsächliche Ballengewicht zu bestimmen.

Alternativ oder zusätzlich kann die Kippwinkel-Ausgleichsvorrichtung das Signal der Neigungssensorik bzw. die sensorisch erfasste Neigung bzw. Verkippung des Wickeltischs aber auch zur Ansteuerung eines Aktors verwenden, um den Wickeltisch in eine definierte Ausrichtung gegenüber der Horizontalen bzw. der Wirkrichtung der Erdbeschleunigung zu bringen. Die Kippwinkel-Ausgleichsvorrichtung kann hierzu eine Steuervorrichtung zum Ansteuern eines Kippantriebs zum Verkippen des Wickeltischs umfassen, wobei die Steuervorrichtung in Abhängigkeit des Signals der Neigungssensorik den Kippantrieb so ansteuern kann, dass der Wickeltisch in eine definierte Messposition bzw. -ausrichtung verbracht wird. Sobald diese definierte Messposition des Wickeltischs erreicht bzw. eingestellt ist, kann das Signal des Kraftmessbolzens aufgenommen und hieraus das Gewicht des Erntegutballens bestimmt werden. Die genannte, definierte Messposition des Wickeltischs kann insbesondere eine zumindest näherungsweise horizontale Ausrichtung des Wickeltischs sein, um Neigungseinflüsse weitgehend von vornherein auszuschließen. Grundsätzlich käme es aber auch in Betracht, die Messung durch den Kraftmessbolzen in einer anderen, nicht horizontalen Stellung des Wickeltischs vorzunehmen. Solange die Stellung definiert bzw. bekannt ist, kann das Messsignal des Kraftmessbolzens in einfacher Weise in das Gewicht des Ballens umgerechnet werden.

Vorteilhafterweise kann die vom Kraftmessbolzen gebildete Kippachse zentral, insbesondere etwa mittig unter bzw. an dem Wickeltisch angebracht sein.

Die von dem Kraftmessbolzen gebildete Kippachse für den Wickeltisch kann horizontal ausgerichtet sein, wenn die Erntemaschine auf einer horizontalen Fläche aufsteht. Die genannte Kippachse kann dabei quer zur Fahrtrichtung ausgerichtet sein, um die Verkippung um die Kippachse zum Ablegen des Ballens nutzen zu können.

Die Erfindung wird nachfolgend anhand eines bevorzugten Ausführungsbeispiels und zugehörigen Zeichnungen näher erläutert. In der Zeichnung zeigt:

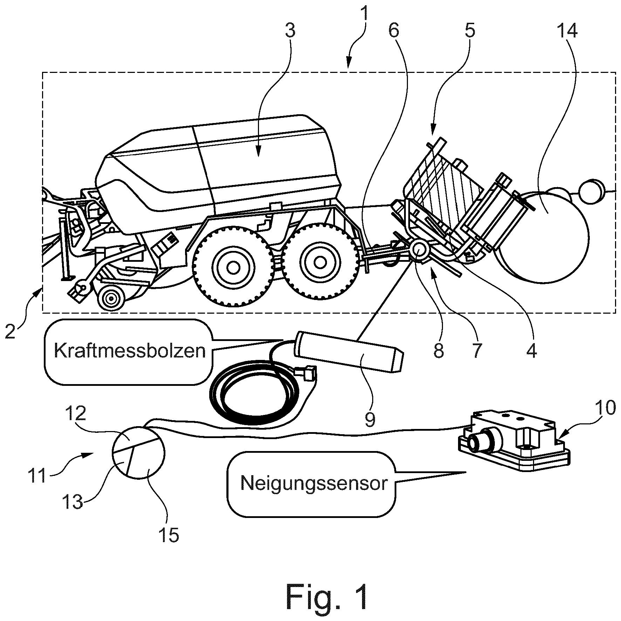

- Fig. 1:: eine landwirtschaftliche Erntemaschine in Form einer Ballenpresse mit einem der Ballenformkammer nachgeordneten Wickelvorrichtung zum Umwickeln des Erntegutballens, der einen kippbaren Wickeltisch umfasst.

Wie Figur 1 zeigt, kann die Erntemaschine als Anbaugerät zum Anbau an einen Schlepper ausgebildet sein. Unabhängig hiervon kann die Erntemaschine als Ballenpresse ausgebildet sein, die mit einer Aufnahmevorrichtung 2 Erntegut vom Boden aufnehmen und in einer Ballenformeinrichtung 3 zu Erntegutballen formen kann. Im Ablegebereich der Ballenformeinrichtung 3 ist ein Wickeltisch 4 einer Wickelvorrichtung 5 angeordnet, sodass die Ballenformeinrichtung 3 geformte Erntegutballen auf dem Wickeltisch 4 ablegen kann. Beispielsweise kann der Wickeltisch 4 über einen Anbaurahmen 6 am Maschinenrahmen der Ballenpresse angebaut sein oder einen eigenen Maschinenrahmen aufweisen.

Der Wickeltisch 4 ist dabei mittels eines Kipplagers 7 verkippbar am Anbau- oder Maschinenrahmen 6 verkippbar gelagert, wobei sich die vom Kipplager 7 definierte Kippachse 8 liegend quer zur Fahrtrichtung erstrecken kann, um den Wickeltisch 4 aus einer näherungsweise liegenden bzw. horizontalen Wickelstellung in eine schräge Ablegestellung nach hinten kippen zu können, vgl. Figur 1.

Die Wickelvorrichtung 5 kann um den Wickeltisch 4 herum bzw. über dem Wickeltisch 4 an sich bekannte Wickelmittel zum Umwickeln des Ballens mit Folie, einem Netz oder einer Schnur oder auch einem anderen Wickelmaterial aufweisen.

Die genannte Kippachse 8 kann etwa mittig zentral unter dem Wickeltisch 4 angeordnet sein, wobei die genannte Kippachse 8 durch einen Kraftmessbolzen 9 gebildet ist, der den Hauptaufnahmebolzen des Lagers des Wickeltisches 4 bilden bzw. darin integriert sein kann.

Dem Wickeltisch 4 ist ferner eine Neigungssensorik 10 zugeordnet, die die Neigung des Wickeltisches 4 gegenüber der Horizontalen bestimmen kann. Die genannte Neigungssensorik 10 kann beispielsweise einen Gyroskop-Sensor und/oder eine Inertialmesseinrichtung IMU umfassen und kann vorteilhafterweise die absolute Neigung des Wickeltischs 4 im Raum bestimmen.

Vorteilhafterweise kann die Neigungssensorik 10 bzw. deren Gyroskop-Sensor und/oder Inertialmesseinrichtung am Wickeltisch 4 angebracht sein, um dessen Neigungsbewegungen mitzumachen.

Grundsätzlich wäre es aber auch möglich, die Neigungsbestimmung sozusagen aufzuspalten und mittels eines Neigungssensors die Neigung des Maschinenrahmens 6 im Raum zu erfassen und zusätzlich die relative Neigung des Wickeltischs 4 gegenüber dem Maschinenrahmen mit einem weiteren Neigungssensor zu messen, um aus diesen beiden Größen dann die absolute Neigung bzw. Verkippung des Wickeltischs 4 im Raum zu bestimmen.

Die den Kraftmessbolzen 9 umfassende Wiegevorrichtung 11 umfasst eine Auswerteeinrichtung 12, die eine Recheneinrichtung umfassen kann. Die genannte Auswerteeinrichtung 12 wertet einerseits die Signale des Kraftmessbolzens 9 aus und wertet andererseits die Signale der Neigungssensorik 10 aus, um die Neigung des Wickeltischs 4 zu bestimmen und sozusagen "wissen", bei welcher Neigung des Wickeltischs 4 das Signal des Kraftmessbolzens 9 aufgenommen wurde.

Die genannte Auswerteeinrichtung 12 kann das Kraftmessbolzensignal unter Berücksichtigung des Neigungssignals der Neigungssensorik 10 korrigieren, um den Einfluss einer Verkippung des Wickeltischs 4 auf die Gewichtsmessung herauszurechnen.

Alternativ oder zusätzlich kann die Wiegevorrichtung 11 auch eine Steuervorrichtung 13 umfassen, die beispielsweise einen Mikroprozessor und eine Programmspeichereinrichtung umfassen kann, wobei unabhängig hiervon die genannte Steuervorrichtung 13 dazu konfiguriert sein kann, in Abhängigkeit des Signals der Neigungssensorik 10 einen Aktor zum Verkippen des Wickeltischs 4 so anzusteuern, dass der Wickeltisch 4 in eine definierte Messstellung verbracht wird, in der dann das Signal des Kraftmessbolzens 9 aufgenommen wird, um aus dem auf diese Weise bestimmten Kraftmessbolzensignal dann das Gewicht des Erntegutballens zu bestimmen.

Insbesondere kann die Steuervorrichtung 13 den Kippantrieb des Wickeltischs 4 so ansteuern, dass der Wickeltisch 4 in eine weitestgehend horizontale Ausrichtung verbracht wird, wenn bzw. bevor das Kraftmessbolzensignal aufgenommen und für die Bestimmung des Gewichts des Ballens verwendet wird.

## Patentansprüche

1. Landwirtschaftliche Erntemaschine mit einem Wickeltisch (4) für einen Erntegutballen (14), wobei der Wickeltisch (4) um eine Kippachse (8) verkippbar gelagert ist und eine Wiegevorrichtung (11) zum Wiegen des Erntegutballens auf dem Wickeltisch (4) vorgesehen ist, die eine Kippwinkel-Ausgleichsvorrichtung (15) umfasst, die eine Neigungssensorik (10) zum Bestimmen der Verkippung des Wickeltischs (4) gegenüber der Horizontalen aufweist, **dadurch gekennzeichnet, dass** die Wiegevorrichtung (11) einen Kraftmessbolzen (9) umfasst, der die Kippachse (8) des Wickeltischs (4) bildet und/oder darin integriert ist, sowie die Kippwinkel-Ausgleichsvorrichtung (15) dazu ausgebildet ist, für die Aufnahme des Messsignals des Kraftmessbolzens (9) den Wickeltisch (4) in eine definierte Messstellung bezüglich der Horizontalen zu verkippen.

2. Landwirtschaftliche Erntemaschine nach dem vorhergehenden Anspruch, wobei die Neigungssensorik (10) einen Gyroskopsensor umfasst.

3. Landwirtschaftliche Erntemaschine nach einem der vorhergehenden Ansprüche, wobei die Neigungssensorik (10) eine Inertialmesseinrichtung mit Beschleunigungs- und Drehratensensormitteln zum Bereitstellen von Beschleunigungs- und Drehratensignalen, die die Beschleunigung und Drehraten des Wickeltischs (4) wiedergeben, umfasst.

4. Landwirtschaftliche Erntemaschine nach einem der vorhergehenden Ansprüche, wobei die Neigungssensorik (10) am Wickeltisch (4) und/oder einem damit verbundenen Anbauteil montiert ist und Kippbewegungen des Wickeltischs (4) mitmacht.

5. Landwirtschaftliche Erntemaschine nach einem der vorhergehenden Ansprüche, wobei die von dem Kraftmessbolzen (9) gebildete Kippachse (8) zentral, etwa mittig unter/an dem Wickeltisch angebracht ist, insbesondere bei horizontalem Aufstand der Erntemaschine horizontal ausgerichtet ist.

6. Landwirtschaftliche Erntemaschine nach einem der vorhergehenden Ansprüche, wobei die Kippwinkel-Ausgleichsvorrichtung (15) eine Recheneinheit aufweist, die dazu ausgebildet ist, die Signale des Kraftmessbolzens (9) und der Neigungssensorik (10) zu verrechnen und das Gewicht des Erntegutballens (14) aus dem Signal des Kraftmessbolzens (9) und dem Signal der Neigungssensorik (10) rechnerisch zu bestimmen.

7. Landwirtschaftliche Erntemaschine nach einem der vorhergehenden Ansprüche, wobei die Kippwinkelausgleichsvorrichtung (15) eine Steuervorrichtung (13) zum Ansteuern einer Kippaktorik zum Verkippen des Wickeltischs (4) aufweist, wobei die Steuervorrichtung (13) dazu ausgebildet ist, den Wickeltisch (4) durch die Kippaktorik in die definierte Messstellung zu verbringen, bevor das Messsignal des Kraftmessbolzens (9) aufgenommen wird.

8. Landwirtschaftliche Erntemaschine nach einem der vorhergehenden Ansprüche, wobei die Kippwinkelausgleichsvorrichtung (15) dazu ausgebildet ist, ein Messsignal des Kraftmessbolzens (9) um die von der Neigungssensorik (10) bestimmte Verkippung des Wickeltischs (4) zu korrigieren.

## Claims

1. Agricultural harvesting machine having a wrapping table (4) for a crop bale (14), wherein the wrapping table (4) is mounted so as to be tiltable about a tilting axis (8) and a weighing device (11) is provided for weighing the crop bale on the wrapping table (4), which comprises a tilt angle compensation device (15) having a tilt sensor (10) for determining the tilting of the wrapping table (4) relative to the horizontal, **characterised in that** the weighing device (11) comprises a force measuring pin (9) that forms the tilting axis (8) of the wrapping table (4) and/or is integrated therein, and the tilt angle compensation device (15) is designed to tilt the wrapping table (4) into a defined measuring position with respect to the horizontal in order to receive the measuring signal of the force measuring pin (9).

2. Agricultural harvesting machine according to the preceding claim, wherein the tilt sensor system (10) comprises a gyroscope sensor.

3. Agricultural harvesting machine according to either one of the preceding claims, wherein the tilt sensor system (10) comprises an inertial measuring device with an acceleration and rotation rate sensor means for providing acceleration and rotation rate signals representing the acceleration and rotation rates of the wrapping table (4).

4. Agricultural harvesting machine according to any one of the preceding claims, wherein the tilt sensor system (10) is mounted on the wrapping table (4) and/or an attachment connected thereto and follows tilting movements of the wrapping table (4).

5. Agricultural harvesting machine according to any one of the preceding claims, wherein the tilting axis (8) formed by the force measuring pin (9) is mounted centrally, approximately in the centre under/on the wrapping table, and in particular is aligned horizontally when the harvesting machine is in a horizontal position.

6. Agricultural harvesting machine according to any one of the preceding claims, wherein the tilt angle compensation device (15) has a computing unit designed to calculate the signals of the force measuring pin (9) and the tilt sensor system (10) and to determine the weight of the crop bale (14) by calculation from the signal of the force measuring pin (9) and the signal of the tilt sensor system (10).

7. Agricultural harvesting machine according to any one of the preceding claims, wherein the tilt angle compensation device (15) has a control device (13) for controlling a tilting actuator for tilting the wrapping table (4), wherein the control device (13) is designed to move the wrapping table (4) into the defined measuring position by the tilting actuator before the measuring signal of the force measuring pin (9) is recorded.

8. Agricultural harvesting machine according to any one of the preceding claims, wherein the tilt angle compensation device (15) is designed to adjust a measuring signal of the force measuring pin (9) by the tilting of the wrapping table (4) determined by the tilt sensor system (10).

## Revendications

1. Machine de récolte agricole avec une table d'enrubannage (4) pour une balle de produit récolté (14), la table d'enrubannage (4) étant montée de manière à pouvoir basculer autour d'un axe de basculement (8) et un dispositif de pesage (11) étant prévu pour peser la balle de produit récolté sur la table d'enrubannage (4), lequel comprend un dispositif de compensation d'angle de basculement (15) qui présente un système de détection d'inclinaison (10) pour déterminer le basculement de la table d'enrubannage (4) par rapport à l'horizontale, **caractérisé en ce que** le dispositif de pesage (11) comprend un boulon de mesure de force (9), qui forme l'axe de basculement (8) de la table d'enrubannage (4) et/ou est intégré dans celui-ci, et le dispositif de compensation d'angle de basculement (15) est réalisé pour faire basculer la table d'enrubannage (4) dans une position de mesure définie par rapport à l'horizontale pour l'enregistrement du signal de mesure du boulon de mesure de force (9).

2. Machine de récolte agricole selon la revendication précédente, dans laquelle le système de détection d'inclinaison (10) comprend un capteur gyroscopique.

3. Machine de récolte agricole selon l'une quelconque des revendications précédentes, dans laquelle le système de détection d'inclinaison (10) comprend un appareil de mesure inertielle avec des moyens de détection d'accélération et de vitesse de rotation pour fournir des signaux d'accélération et de vitesse de rotation qui sont représentatifs de l'accélération et de la vitesse de rotation de la table d'enrubannage (4).

4. Machine de récolte agricole selon l'une quelconque des revendications précédentes, dans laquelle le système de détection d'inclinaison (10) est monté sur la table d'enrubannage (4) et/ou sur une pièce rapportée qui y est reliée et accompagne les mouvements de basculement de la table d'enrubannage (4).

5. Machine de récolte agricole selon l'une quelconque des revendications précédentes, dans laquelle l'axe de basculement (8) formé par le boulon de mesure de force (9) est disposé de manière centrale, à peu près au milieu, sous/sur la table d'enrubannage, et est notamment orienté horizontalement lorsque la machine de récolte est en position horizontale.

6. Machine de récolte agricole selon l'une quelconque des revendications précédentes, dans laquelle le dispositif de compensation d'angle de basculement (15) présente une unité de calcul qui est réalisée pour calculer les signaux du boulon de mesure de force (9) et du système de détection d'inclinaison (10) et pour déterminer par calcul le poids de la balle de produit récolté (14) à partir du signal du boulon de mesure de force (9) et du signal du système de détection d'inclinaison (10).

7. Machine de récolte agricole selon l'une quelconque des revendications précédentes, dans laquelle le dispositif de compensation d'angle de basculement (15) présente un dispositif de commande (13) pour commander un actionneur de basculement pour le basculement de la table d'enrubannage (4), dans laquelle le dispositif de commande (13) est réalisé pour amener la table d'enrubannage (4) dans la position de mesure définie par l'actionneur de basculement, avant que le signal de mesure du boulon de mesure de force (9) ne soit enregistré.

8. Machine de récolte agricole selon l'une quelconque des revendications précédentes, dans laquelle le dispositif de compensation d'angle de basculement (15) est réalisé pour corriger un signal de mesure du boulon de mesure de force (9) du basculement de la table d'enrubannage (4) déterminé par le système de détection d'inclinaison (10).
